(19) Europäisches Patentamt / European Patent Office / Office européen des brevets

(11) **EP 1 216 557 B1**

(12) **FASCICULE DE BREVET EUROPEEN**

(45) Date de publication et mention de la délivrance du brevet:
**24.06.2009 Bulletin 2009/26**

(21) Numéro de dépôt: **00966247.9**

(22) Date de dépôt: **29.09.2000**

(51) Int Cl.:
*H04L 27/26* *(2006.01)*      *H04L 27/00* *(2006.01)*

(86) Numéro de dépôt international:
**PCT/FR2000/002716**

(87) Numéro de publication internationale:
**WO 2001/024470 (05.04.2001 Gazette 2001/14)**

(54) **PROCEDE DE TRANSMISSION D'UN SIGNAL MULTIPORTEUSE BIORTHOGONAL MODULE AVEC OFFSET (BFDM/OM)**

VERFAHREN ZUR ÜBERTRAGUNG EINES MIT OFFSET MODULIERTEN BIORTHOGONALEN MEHRTRÄGERSIGNALS (BFDM/OM)

METHOD FOR TRANSMITTING AN OFFSET MODULATED BIORTHOGONAL MULTICARRIER SIGNAL (BFDM/OM)

(84) Etats contractants désignés:
**AT BE CH CY DE DK ES FI FR GB GR IE IT LI LU MC NL PT SE**

(30) Priorité: **29.09.1999 FR 9912371**

(43) Date de publication de la demande:
**26.06.2002 Bulletin 2002/26**

(73) Titulaires:
• **FRANCE TELECOM**
  **75015 Paris (FR)**
• **TDF**
  **75015 Paris (FR)**

(72) Inventeurs:
• **SIOHAN, Pierre**
  **F-35200 Rennes (FR)**
• **SICLET, Cyrille**
  **F-25000 Besançon (FR)**

(74) Mandataire: **Vidon, Patrice**
  **Cabinet Vidon**
  **Technopole Atalante**
  **16B Rue de Jouanet**
  **BP 90333**
  **35703 Rennes Cedex 7 (FR)**

(56) Documents cités:
**FR-A- 2 765 757**

• **G. STRANG AND T. NGUYEN: "Wavelets and Filter Banks" 1996 , WELLESLEY-CAMBRIDGE PRESS , WELLESLEY MA, USA XP002139689 page 301 -page 303 page 304 page 307 page 309; figure 9.7 page 325 -page 331 page 391 -page 392**
• **CARIOLARO G ET AL: "AN OFDM SYSTEM WITH A HALF COMPLEXITY" PROCEEDINGS OF THE GLOBAL TELECOMMUNICATIONS CONFERENCE (GLOBECOM),US,NEW YORK, IEEE, 1994, pages 237-242, XP000488550 ISBN: 0-7803-1821-8**
• **AKANSU A N ET AL: "ORTHOGONAL TRANSMULTIPLEXERS IN COMMUNICATION: A REVIEW" IEEE TRANSACTIONS ON SIGNAL PROCESSING,US,IEEE, INC. NEW YORK, vol. 46, no. 4, 1 janvier 1998 (1998-01-01), pages 979-995, XP000770957 ISSN: 1053-587X**
• **BOLCSKEI H ET AL: "Design of pulse shaping OFDM/OQAM systems for high data-rate transmission over wireless channels" 1999 IEEE INTERNATIONAL CONFERENCE ON COMMUNICATIONS (CAT. NO. 99CH36311), 6 - 10 juin 1999, pages 559-564 vol.1, XP002139687 Piscataway, NJ, USA, ISBN: 0-7803-5284-X cité dans la demande**
• **GOVARDHANAGIRI S ET AL: "Performance analysis of multicarrier modulation systems using cosine modulated filter banks" 1999 IEEE INTERNATIONAL CONFERENCE ON ACOUSTICS, SPEECH, AND SIGNAL PROCESSING. PROCEEDINGS. ICASSP99 (CAT. NO.99CH36258), 15 - 19 mars 1999, pages 1405-1408 vol.3, XP002139688 Piscataway, NJ, USA, IEEE, ISBN: 0-7803-5041-3**

- **LE BIHAN H ET AL: "IDENTIFICATION TECHNIQUES FOR THE DESIGN OF CASCADE FORMS PERFECT-RECONSTRUCTION TWO-CHANNEL FILTER BANKS" PROCEEDINGS OF THE INTERNATIONAL CONFERENCE ON ACOUSTICS, SPEECH, AND SIGNAL PROCESSING (ICASSP), 1994, pages III-189-III-192, XP000529913 New York, US ISBN: 0-7803-1776-9**

**Description**

Le domaine de l'invention est celui de la transmission de signaux numériques, basés sur des modulations multiporteuses. Plus précisément, l'invention concerne la transmission, et notamment la modulation et la démodulation, des signaux multiporteuses biorthogonaux (BFDM/OM, en anglais « Biorthogonal Frequency Division Multiplex/ Offset Modulation »).

Depuis plusieurs années, les modulations multiporteuses ont suscité un grand intérêt. Celui-ci se justifie, en particulier, dans le cas des communications avec les mobiles, où leur efficacité a déjà été démontrée pour la diffusion des signaux radio avec, tout d'abord, le système « Digital Audio Broadcasting » (DAB, en français: « Diffusion Audionumérique ») [1] (par souci de simplification et de lisibilité, toutes les références citées dans la présente description ont été regroupées en annexe E) mais également en transmission haut débit sur lignes bifilaires téléphoniques avec les systèmes ADSL (Asymmetric Digital Subscriber Line) et VDSL (Very high bit rate Digital Subscriber Line) [2].

Dans les schémas de modulations multiporteuses usuels, un ensemble de fréquences porteuses, choisi de manière à satisfaire des conditions d'orthogonalité en temps et en fréquence, est multiplexé. C'est le système dit « Orthogonally Frequency Division Multiplex » (OFDM, en français : « multiplex de fréquences orthogonales »).

Il est possible d'associer à chacune des porteuses une modulation sans offset (SM : « Synchronous Modulation ») ou avec offset (OM : « Offset Modulation »). On aboutit alors respectivement aux systèmes OFDM/SM et OFDM/OM. En particulier, l'association à chacune des porteuses d'une modulation d'amplitude en quadrature, sans ou avec « offset », produit, respectivement, les modulations OFDM/QAM (QAM, en anglais : « Quadrature Amplitude Modulation ») et OFDM/OQAM (OQAM : « Offset QAM »). Cette dernière modulation fonctionne sans intervalle de garde et offre également une possibilité de choix plus étendue en ce qui concerne la fonction prototype [3], [4].

Toutefois, l'orthogonalité de l'OFDM ne lui assure l'optimalité que dans le cas de canaux de transmission que l'on peut assimiler à un bruit additif blanc et gaussien. Dans tous les autres cas, l'optimalité de l'OFDM n'est pas garantie.

De ce point de vue, les modulations multiporteuses biorthogonales (BFDM) offrent des possibilités supplémentaires et, en particulier, elles peuvent constituer un meilleur compromis vis-à-vis de canaux de type radio-mobiles qui sont à la fois dispersifs en temps et en fréquence [5].

Par ailleurs une modulation biorthogonale avec offset (BFDM/OM) permet de conserver l'avantage de l'OFDM/OM avec la possibilité d'obtenir des fonctions prototypes bien localisées en temps et en fréquence.

A titre indicatif, on rappelle brièvement, en annexe A, les définitions essentielles concernant les aspects mathématiques liés aux modulations de type BFDM/OM. Ces aspects ont déjà fait l'objet de publications, avec l'appelation BFDM/OFDM, également conservée dans les annexes de la présente description.

Dans un article récemment soumis [6], une technique de discrétisation des systèmes de modulation BFDM/OM a déjà été proposée. Toutefois l'approche décrite en [6], [7] se base essentiellement sur la discrétisation des équations continues qui étendent en discret le formalisme introduit en continu dans la référence [4] pour l'OFDM/OM.

Pour l'OFDM/OM, cela suppose donc l'utilisation d'une transformation mathématique, puis de la transformation inverse (classiquement FFT$^{-1}$ puis FFT). On tronque ensuite le signal discrétisé.

L'invention a notamment pour objectif de fournir une nouvelle technique de modulation et de démodulation d'un signal BFDM/OM qui soit plus efficace et plus aisée à mettre en oeuvre que les techniques connues.

Ainsi, un objectif de l'invention est de fournir de telles techniques de modulation et de démodulation permettant d'assurer, sur un plan théorique, que l'IES (Interférence entre Symboles) et l'IEC (Interférence entre Canaux) soient exactement nuls, sur un support fini.

L'invention a également pour objectif de fournir de telles techniques qui permettent de réaliser des dispositifs satisfaisant structurellement l'annulation de l'IES et de l'IEC.

Un autre objectif de l'invention est de fournir de telles techniques, permettant aussi bien la mise en oeuvre de fonctions prototypes symétriques ou non, et identiques ou non à l'émission et à la réception.

Encore un autre objectif de l'invention est de fournir de telles techniques de modulation et de démodulation, qui permettent de réduire et de contrôler les retards de reconstruction, par exemple pour des applications temps réel ou interactive. En d'autres termes, un objectif est de fournir de telles techniques permettant, pour des filtres prototypes de longueur donnée, d'obtenir des délais de reconstruction qui ne sont pas fixes (et qui peuvent donc être plus faibles que ceux de l'OFDM/OM).

L'invention a également pour objectif de fournir de telles techniques, qui soient optimales, par rapport à des distorsions produites par un canal gaussien et/ou par des canaux non gaussiens qui ne se réduisent pas simplement à un bruit additif blanc et gaussien.

Encore un autre objectif de l'invention est de fournir de telles techniques, permettant d'obtenir des performances supérieures aux techniques connues, en terme de localisation de la transformée.

L'invention a également pour objectif de fournir des dispositifs de modulation et/ou de démodulation, et plus généralement de transmission et/ou de réception de signaux, qui soient aisés et peu coûteux à réaliser et à mettre en oeuvre.

Ces objectifs, ainsi que d'autres qui apparaîtront par la suite, sont atteints selon l'invention à l'aide d'un procédé de transmission d'un signal multiporteuse biorthogonal BFDM/OM. mettant en oeuvre une structure de transmultiplexeur assurant :

- une étape de modulation, à l'aide d'un banc de filtres de synthèse, présentant 2M branches parallèles. M ≥ 2, alimentées chacune par des données source, et comprenant chacune un expanseur d'ordre M et des moyens de filtrage ;
- une étape de démodulation, à l'aide d'un banc de filtres d'analyse, présentant 2M branches parallèles, comprenant chacune un décimateur d'ordre M et des moyens de filtrage, et délivrant des données reçues représentatives desdites données source,

lesdits moyens de filtrage étant déduits d'une fonction de modulation prototype prédéterminée.

En d'autres termes, l'invention propose une réalisation nouvelle des systèmes de modulation BFDM/OM, basée sur une description nouvelle d'un système de modulation, sous la forme d'un transmultiplexeur, appelé par la suite transmultiplexeur modulé. Comme cela apparaîtra par la suite, cette technique présente de nombreux avantages, tant en termes de modes de réalisation que d'efficacité des traitements, et notamment de l'annulation de l'IES et de l'IEC.

On notera qu'une telle structure de transmultiplexeur modulé, permettant la transmission d'un signal multiporteuse modulé avec offset, se distingue fortement des structures de transmultiplexeurs de l'art antérieur. En effet, les schémas connus de transmultiplexeurs présentent des facteurs de décimation-expansion supérieurs ou égaux au nombre de sous-bandes mises en oeuvre, tel que cela est décrit, par exemple, dans l'ouvrage "Wavelets and Filter Banks" de G. Strand et T. Nguyen (Wellesey-Cambridge Press, Wellesey MA, USA - 1996). L'approche de l'invention permet en revanche, par la mise en oeuvre, sur chacune des branches des bancs de filtres, de moyens de filtrage déduits d'une fonction de modulation prototype prédéterminée, d'obtenir un nombre de sous-bandes supérieur (double) au facteur d'expansion et de décimation.

De plus, une telle structure de transmultiplexeur modulé selon l'invention présente l'avantage, par rapport aux transmultiplexeurs de l'art antérieur, de permettre un grand choix de filtres prototypes.

Préférentiellement, lesdits moyens de filtrage dudit banc de filtres de synthèse et/ou dudit banc de filtres d'analyse sont respectivement regroupés sous la forme d'une matrice polyphase.

Cela permet, sur un plan pratique, de simplifier la complexité opératoire du transmultiplexeur.

De façon avantageuse, au moins une desdites matrices polyphases comprend une transformée de Fourier inverse à 2M entrées et 2M sorties. Les inventeurs ont en effet montré que l'utilisation d'une telle transformée, pour laquelle des algorithmes sont disponibles (IFFT), permet de simplifier fortement la réalisation et la mise en oeuvre de l'invention.

L'invention concerne également le procédé de modulation d'un signal transmis selon le procédé de transmission décrit ci-dessus. Un tel procédé de modulation met avantageusement en oeuvre une transformée de Fourier inverse alimentée par 2M données source ayant chacune subie un décalage de phase prédéterminée, et alimentant 2M modules de filtrage, suivis chacun d'un expanseur d'ordre M, dont les sorties sont regroupées puis transmises.

L'algorithme de modulation peut alors délivrer des données s[k] telles que :

$$x_m^0(n) = a_{m,n} e^{j\frac{\pi}{2}n}$$

$$x_l^1(n) = \sqrt{2} \sum_{k=0}^{2M-1} x_k^0(n) e^{-j\frac{2\pi}{2M}k\frac{D-M}{2}} e^{j\frac{2\pi}{2M}kl}$$

$$= 2M\sqrt{2}\,\text{IFFT}\left(x_0^0(n), \cdots, x_{2M-1}^0(n) e^{-j\frac{2\pi}{2M}(2M-1)\frac{D-M}{2}}\right)[l]$$

$$x_l^2(n) = \sum_{k=0}^{m-1} p(l+2kM) x_k^1(n-2k)$$

$$s[k] = \sum_{n=\left\lfloor\frac{k}{M}\right\rfloor-1}^{\left\lfloor\frac{k}{M}\right\rfloor} x_{k-nM}^2(n)$$

où D=αM-β,

avec α entier présentant le retard de reconstruction ;

β entier compris entre 0 et M-1 ;

et $\lfloor\ \rfloor$ est la fonction "partie entière".

De la même façon, l'invention concerne le procédé de démodulation d'un signal transmis selon le procédé de transmission décrit précédemment. Ce procédé de démodulation met avantageusement en oeuvre une transformée de Fourier inverse alimentée par 2M branches, elles-mêmes alimentées par ledit signal transmis, et comprenant chacune un décimateur d'ordre M suivi d'un module de filtrage, et alimentant 2M multiplieurs de décalage de phase, délivrant une estimation des données source.

Le procédé de démodulation peut ainsi, avantageusement, délivrer des données $\hat{a}_{m.n-\alpha}$ telles que :

$$\hat{x}_l^{;2}(n-\alpha) = s\left[nM - \beta - l\right]$$

$$\hat{x}_l^{;1}(n-\alpha) = \sum_{k=0}^{m-1} p(l + 2kM)\hat{x}_l^{;2}(n-\alpha-2k)$$

$$\hat{x}_l^{;0}(n-\alpha) = \sqrt{2}e^{-j\frac{2\pi}{2M}l\frac{D+M}{2}} \sum_{k=0}^{2M-1} \hat{x}_l^{;1}(n-\alpha)e^{j\frac{2\pi}{2M}kl}$$

$$= 2M\sqrt{2}e^{-j\frac{2\pi}{2M}l\frac{D+M}{2}}\text{IFFT}\left(\hat{x}_l^{\prime 1}(n-\alpha),\cdots,\hat{x}_{2M-1}^{\prime 1}(n-\alpha)\right)[l]$$

$$\hat{a}_{m,n-\alpha} = \Re\left\{e^{-j\frac{\pi}{2}(n-\alpha)}\hat{x}_l^{;0}(n-\alpha)\right\}$$

De façon avantageuse, dans le procédé de modulation et/ou de démodulation lesdits modules de filtrage sont réalisés sous l'une des formes appartenant au groupe comprenant :

- les filtres à structure transverse ;
- les filtres à structure en échelle ; et
- les filtres à structure en treillis.

D'autres structures de filtres peuvent bien sûr être envisagées, et notamment les structures de filtres à réponse impulsionnelle infinie (RII).

Selon un mode de réalisation particulier, correspondant notamment à la structure en treillis, ledit signal multiporteuse biorthogonal est un signal OFDM/OM. Des solutions techniques particulières peuvent alors être envisagées.

L'invention concerne également, bien sûr, les dispositifs d'émission et/ou de réception d'un signal BFDM/OM, mettant en oeuvre les procédés présentés ci-dessus.

D'autres caractéristiques et avantages de l'invention apparaîtront plus clairement à la lecture de modes de réalisation préférentiels, donnés à titre de simples exemples illustratifs et non limitatifs et des dessins annexés parmi lesquels :

-  la figure 1 illustre la structure générale d'un transmultiplexeur associé à la modulation BFDM/OM, selon l'invention ;
-  la figure 2 présente, de façon simplifée, une vue globale de la chaîne mettant en oeuvre un transmultiplexeur tel qu'illustré en figure 1 ;
-  la figure 3 est une représentation sous une forme polyphase du transmultiplexeur de la figure 1 ;
-  la figure 4 illustre sur un cas élémentaire, l'insertion d'un opérateur de retard placé entre un expanseur et un décimateur, utilisé dans la mise en oeuvre de la représentation polyphase de la figure 3 ;
-  les figures 5 et 6 présentent respectivement un modulateur et un démodulateur BFDM/OM réalisés à l'aide d'une FFT inverse ;
-  les figures 7 et 8 présentent des filtres à structure en échelle pouvant être utilisés à la place des filtres polyphases des figures 5 et 6, respectivement lorsque s, paramètre entier défini par la suite, est pair ou impair ;

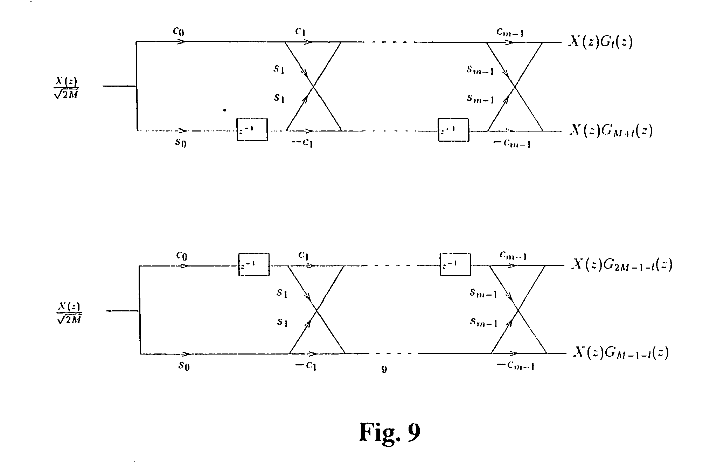

-  la figure 9 illustre une structure sous la forme de treillis pour les filtres polyphases des figures 5 et 6, dans le cas d'un signal OFDM/OM à filtres prototypes symétriques ;

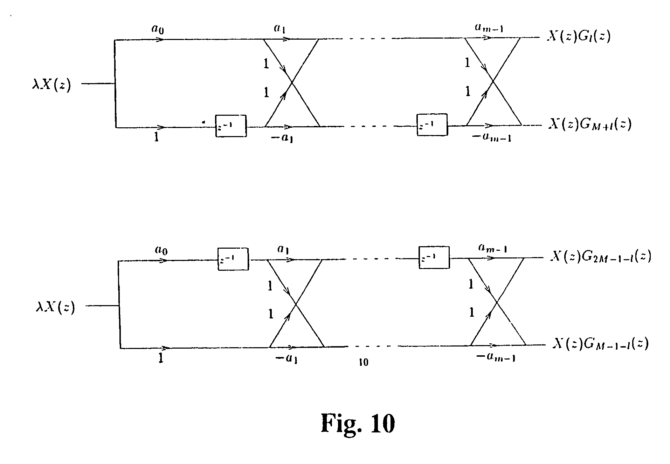

-  la figure 10 présente un treillis selon la figure 9, dans le cas normalisé :
-  les figures 11A et 11B d'une part et 12A et 12B d'autre part illustrent les réponses temporelle et fréquentielle obtenues dans deux modes de réalisations particuliers, correspondant aux tableaux de l'annexe D.

Comme indiqué précédemment, la technique de l'invention repose notamment sur une approche particulière de discrétisation, visant à obtenir directement une description du système de type transmultiplexeur modulé. Outre l'avantage d'un cadre de description plus général, cette approche offre de nombreuses possibilités d'exploitation des liens entre les bancs de filtres et les transmultiplexeurs, pour l'optimisation des structures de réalisation et du calcul des coefficients associés.

Après avoir présenté la structure générale de représentation des systèmes BFDM/OM sous la forme d'un modèle discret de type transmultiplexeur, on présente ci-après quatre modes de réalisation particuliers de l'invention correspondant respectivement à :

-  deux modes de réalisation BFDM/OM qui, au modulateur et au démodulateur, utilisent tous deux un algorithme rapide de transformée de Fourier inverse (IFFT) et se distinguent par le type d'implantation des composantes polyphases du filtre prototype :

  -  Mode 1 : Algorithme IFFT + filtrage polyphase transverse ;
  -  Mode 2 : Algorithme IFFT + filtrage en échelle.

-  deux modes de réalisation adaptés à l'OFDM/OM, déduits du BFDM/OM :

  -  Mode 3 : variante du Mode 1 vérifiant l'orthogonalité discrète de l'OFDM/OM avec filtrage polyphase transverse et possibilité de mise en oeuvre de filtre prototype symétrique ou non ;
  -  Mode 4 : variante du mode 2 vérifiant l'orthogonalité discrète de l'OFDM/OM avec filtrage polyphase réalisé par une structure en treillis.

Des méthodes de design de filtres prototypes illustrant ces procédés de réalisation des modulations BFDM/OM et OFDM/OM sont également présentées.

Les résultats présentés illustrent notamment :

-  les possibilités supplémentaires du BFDM/OM pour lequel le délai de transmission reste modulable pour une longueur de filtre prototype donnée. Ceci permet, par exemple à retard de transmission identique, d'améliorer les performances en terme de localisation temps-fréquence de la transformation associée au modulateur. Cela permet également de maintenir des performances élevées du point de vue de la sélectivité tout en réduisant le délai de transmission ;
-  dans le cas de systèmes dits dos-à-dos, la possibilité avec les modes 2 et 4 d'annuler totalement l'interférence entre symboles (IES) et l'interférence entre canaux (IEC) et d'obtenir ainsi ce que l'on peut également appeler la reconstruction parfaite.

D'autres exemples non reportés ici, montrent également qu'il est possible d'obtenir, en biorthogonal, des performances en localisation comparables à celles de l'OFDM/OM, et ceci avec des filtres prototypes beaucoup plus courts.

Pour faciliter la lecture, on retient les notations suivantes : les ensembles, par exemple **R** le corps réel, ainsi que les vecteurs et matrices, par exemple **E**($z$) et **R**($z$) les matrices polyphases, sont notés en caractère gras. Sinon l'ensemble des symboles mathématiques utilisés est noté en caractère standard avec, en général les fonctions du temps en minuscules et les fonctions des domaines transformés ($z$ et Fourier) en majuscules.

1 - Formulation sous forme d'un transmultiplexeur modulé

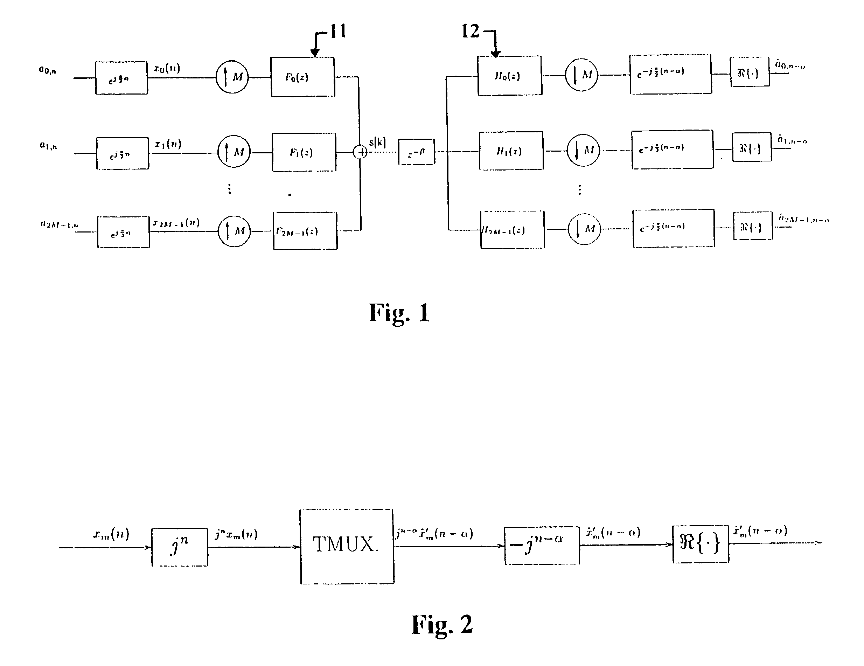

A partir d'un filtre prototype causal $p[k]$, déduit de $h(t)$ par translation et discrétisation, nous obtenons un schéma de réalisation qui est celui de la figure 1.

Dans ce schéma les filtres $F_i(z)$ 11 et $H_i(z)$ 12, avec $0 \le i \le 2M$ - 1, se déduisent de $p[k]$ (ou $P(z)$) par modulation complexe. $\alpha$ et $\beta$, $0 \le \beta \le M$ - 1, sont deux entiers qui se relient à un paramètre $D$ de la modulation $D = \alpha M$ - $\beta$. Les calculs permettant d'aboutir à ce schéma sont reportés en annexe B.

On peut noter également que les filtres prototypes peuvent être différents. Par la suite on se contentera d'étudier le cas particulier où $q[k] = p[D - k]$, sans que cela ne limite la portée de la demande de brevet.

La réalisation d'un schéma de modulation et de démodulation directement selon cette figure 1 serait extrêmement coûteuse, en termes de complexité opératoire. Selon l'approche de l'invention, on décompose donc les filtres prototypes $P(z)$, en fonction de ses composantes polyphases $G_l(z)$, ainsi que cela est présenté en annexe C.

Cette annexe C précise également la relation d'entrée-sortie, les conditions à respecter sur les composantes polyphases et le retard de construction.

2 - Exemples de réalisation

L'ensemble des modes de réalisation décrits par la suite est basé sur la mise en oeuvre d'une transformée de Fourier discrète (TFD).

Cette technique présente bien entendu l'avantage que la TFD se traduit par des algorithmes de calcul rapides, intitulés selon leur sigle anglo-saxon FFT, ou IFFT pour la transformée inverse. (On notera que les équations référencées (1) à (54) se trouvent dans les annexes A à C).

On note :

$$W_1^{\cdot} = \sqrt{2}\begin{pmatrix} 1 & & & 0 \\ & e^{-j\frac{2\pi}{2M}\frac{D+M}{2}} & & \\ & & \ddots & \\ 0 & & & e^{-j\frac{2\pi}{2M}(2M-1)\frac{D+M}{2}} \end{pmatrix} \tag{55}$$

$$W_2^{\cdot} = \sqrt{2}\begin{pmatrix} 1 & & & 0 \\ & e^{-j\frac{2\pi}{2M}\frac{D-M}{2}} & & \\ & & \ddots & \\ 0 & & & e^{-j\frac{2\pi}{2M}(2M-1)\frac{D-M}{2}} \end{pmatrix} \tag{56}$$

Et $W$ la matrice de la transformée de Fourier discrète de taille $2M$ x $2M$ :

$$[W]_{k,l} = e^{-j\frac{2\pi}{2M}kl}, \quad 0 \le l, k \le 2M - 1 \tag{57}$$

En utilisant les équations (35) à (38) (annexe C) on obtient :

$$R(z^2) = \begin{pmatrix} 0 & & G_{2M-1}(z^2) \\ & \cdot^{\cdot^{\cdot}} & \\ G_0(z^2) & & 0 \end{pmatrix} W^{\bullet} W_2^{'} \qquad (58)$$

$$E(z^2) = W_1^{'} W^{\bullet} \begin{pmatrix} G_0(z^2) & & 0 \\ & \ddots & \\ 0 & & G_{2M-1}(z^2) \end{pmatrix} \qquad (59)$$

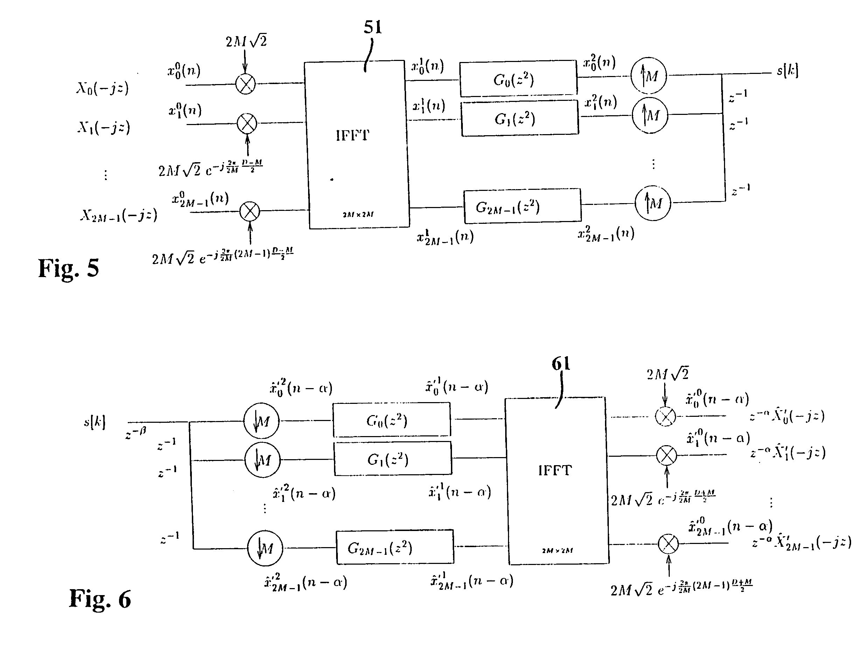

On en déduit les schémas du modulateur de la figure 5 et du démodulateur de la figure 6, tous deux réalisés à l'aide d'une transformée de Fourier inverse IFFT 51, 61. Sur ces figures 5 et 6, s est un entier défini par D = 2.s.M + d, d étant un entier compris entre 0 et 2M-1,

Les notations et données apparaissant sur les figures 5 et 6, de même que sur les autres figures, font bien sûr partie intégrante de la présente description.

Pour simplifier, mais sans perte de généralité, on suppose par la suite que le filtre prototype *P(z)* est de longueur 2*mM* de sorte que toutes les composantes polyphases sont de même longueur m.

*2.1 - Mode 1 : Algorithme IFFT et décomposition polyphase*

En reprenant les notations des figures 5 et 6, on déduit les algorithmes de modulation et de démodulation suivants, déjà mentionnés plus haut :

*2.1.1 Algorithme de modulation*

$$x_m^0(n) = a_{m,n} e^{j\frac{\pi}{2}n} \qquad (60)$$

$$x_l^1(n) = \sqrt{2} \sum_{k=0}^{2M-1} x_k^0(n) e^{-j\frac{2\pi}{2M}k\frac{D-M}{2}} e^{j\frac{2\pi}{2M}kl} \qquad (61)$$

$$= 2M\sqrt{2}\,\text{IFFT}\left( x_0^0(n), \cdots, x_{2M-1}^0(n) e^{-j\frac{2\pi}{2M}(2M-1)\frac{D-M}{2}} \right)[l] \qquad (62)$$

$$x_l^2(n) = \sum_{k=0}^{m-1} p(l+2kM) x_k^1(n-2k) \qquad (63)$$

$$s[k] = \sum_{n=\left\lfloor \frac{k}{M} \right\rfloor - 1}^{\left\lfloor \frac{k}{M} \right\rfloor} x_{k-nM}^2(n) \tag{64}$$

*2.1.2 Algorithme de démodulation*

$$\hat{x}_l^{'2}(n-\alpha) = s[nM - \beta - l] \tag{65}$$

$$\hat{x}_l^{'1}(n-\alpha) = \sum_{k=0}^{m-1} p(l + 2kM)\hat{x}_l^{'2}(n-\alpha - 2k) \tag{66}$$

$$\hat{x}_l^{'0}(n-\alpha) = \sqrt{2}e^{-j\frac{2\pi}{2M}l\frac{D+M}{2}} \sum_{k=0}^{2M-1} \hat{x}_l^{'1}(n-\alpha)e^{j\frac{2\pi}{2M}kl} \tag{67}$$

$$= 2M\sqrt{2}e^{-j\frac{2\pi}{2M}l\frac{D+M}{2}} \text{IFFT}\left(\hat{x}_l^{'1}(n-\alpha), \cdots, \hat{x}_{2M-1}^{'1}(n-\alpha)\right)[l] \tag{68}$$

$$\hat{a}_{m.n-\alpha} = \Re\left\{e^{-j\frac{\pi}{2}(n-\alpha)}\hat{x}_l^{'0}(n-\alpha)\right\} \tag{69}$$

## 2.2- Mode 2 : IFFT et structure en échelle

Les schémas en échelle constituent un moyen d'implantation proposé récemment pour la réalisation des bancs de filtres. Les inventeurs ont validé mathématiquement leur application à la BFDM/OM, décrite ci-après.

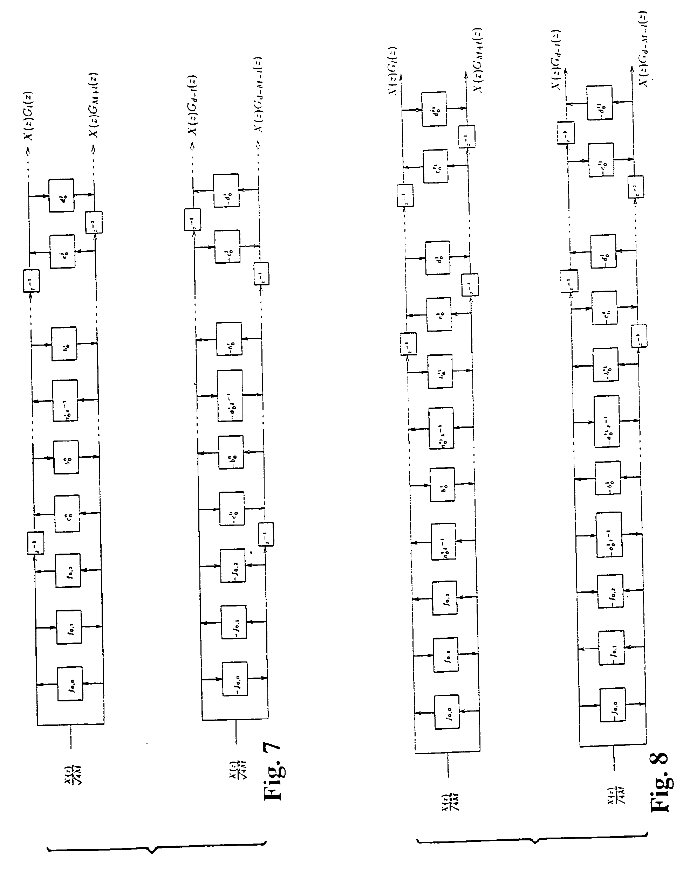

On a vu qu'on peut écrire une modulation BFDM/OM sous la forme d'un transmultiplexeur utilisant deux FFT inverses (figures 5 et 6), dans lequel apparaissent explicitement les composantes polyphases du prototype utilisé. Chaque filtre polyphase peut alors s'écrire sous la forme d'une échelle. Selon que s est pair ou impair, on peut remplacer les filtres $G_l(z)$ des figures 5 et 6 par les schémas donnés par les figures 7 et 8.

Pour aboutir à de tels schémas, une décomposition matricielle des composantes polyphases est mise en oeuvre, qui s'appuie sur des matrices 2x2 dont le nombre et la nature se déterminent en fonction de la longueur du prototype et du délai de reconstruction souhaités.

Par exemple, pour générer la paire de composantes polyphases $[G_l(z), G_{M+l}(z)]$ nous procédons en deux étapes :

- l'initialisation est réalisée par un couple $(F_0, F_1)$. $F_0$ correspond à un produit de trois matrices auquel vont correspondre les trois premiers éléments des schémas du haut aux figures 7 et 8. La forme exacte de $F_1$ dépend de la parité du paramètre s. C'est la matrice identité pour s pair (cf. schéma du haut à la figure 7) ou c'est un produit de deux matrices $C_0$ et $B_0$ pour s impair, auquel vont correspondre les deux éléments suivants dans le schéma du haut à la figure 8. On obtient ainsi un prototype de longueur $2M$ (s = 0) ou $4M$ (s = 1).

- Pour augmenter la longueur de $P(z)$, sans ou avec accroissement de délai, on applique ensuite un jeu de matrices qui sera respectivement soit (**A, B**), soit **(C, D)**. On obtient ainsi la suite du schéma de réalisation.

Le même principe s'applique aux composantes polyphases $[G_{d-l}(z), G_{d-M-l}(z)]$, en prenant cette fois les inverses des matrices précédentes.

Un intérêt de cette structure est qu'elle garantit une reconstruction parfaite, même en présence d'erreur sur les coefficients calculés, en particulier des erreurs de quantification.

Par ailleurs, cette structure facilite aussi l'optimisation du filtre prototype, par exemple en prenant un critère de localisation ou de sélectivité en fréquence : il suffit d'optimiser $\left(\left\lfloor \dfrac{M-1}{2} \right\rfloor + 1\right)(2m+1) \approx mM$ coefficients au lieu de $2mM$, sans introduire de contrainte de reconstruction parfaite.

3 - Complexité des différentes réalisations

Pour effectuer une comparaison des différents modes de réalisation proposés, on se place dans le cas commun où $N = 2mM$. Dans ce cas, chaque composante polyphase a une longueur égale à m.

Chaque composante polyphase peut être réalisée sous forme transverse, sous la forme d'une échelle ou, dans le cas orthogonal, sous celle d'un treillis. Même si les échelles et les treillis possèdent deux sorties, une seule est exploitable.

Sur chaque sous-bande, on effectue au niveau du modulateur :

- une pré-modulation (un décalage de phase, c'est-à-dire une multiplication complexe) ;
- une transformée de Fourier inverse ;
- un filtrage polyphase.

Au démodulateur, on effectue les mêmes opérations dans le sens inverse.

On peut donc en déduire la complexité du transmultiplexeur complet avec pré-modulation, en terme d'opérations complexes (tableau 1) ou réelles (tableau 2).

TABLEAU 1 - Nombre d'opérations complexes par sous-bande et par échantillon pour le transmultiplexeur complet.

|  | Additions complexes | Multiplications complexes |
|---|---|---|
| Réalisation transverse | 2m - 2 + 2 log$_2$ 2M | 2m + 2 + log$_2$ 2$M$ |
| Réalisation en échelles | 4m + 2 + 2 log$_2$ 2M | 4m + 2 + log$_2$ 2$M$ |
| Réalisation en treillis (normalisé) | 4m - 4 + 2 log$_2$ 2M | 4m + 2 + log$_2$ 2$M$ |

TABLEAU 2 - Nombre d'opérations réelles par sous-bande et par échantillon pour le modulateur (ou le démodulateur).

|  | Additions réelles | Multiplications réelles |
|---|---|---|
| Réalisation transverse | 2m + 3log$_2$ 2M | 2m + 4 + 2 log$_2$ 2$M$ |
| Réalisation en échelles | 4m + 4 + 3 log$_2$ 2M | 4m + 6 +2 log$_2$ 2$M$ |
| Réalisation en treillis (normalisé) | 4m + 3 log$_2$ + 2M | 4m + 4 + 2 log$_2$ 2$M$ |

Le gain apporté par rapport à une réalisation directe du schéma de la figure 1 est donc net, puisque celle-ci nécessiterait $2mM$ - 1 additions complexes et $2mM$ + 1 multiplications complexes par sous-bande et par échantillon, au modulateur comme au démodulateur.

En termes de cases mémoire, il faut stocker 4M valeurs complexes pour réaliser la pré-modulation ainsi que les coefficients des différentes structures. Lorsqu'on a les mêmes filtres à l'émission et à la réception, on obtient la première colonne du tableau 3. Par ailleurs, il faut dans tous les cas stocker 4(m + 1)M valeurs complexes dans un "buffer" pour le filtrage polyphase au modulateur comme au démodulateur.

TABLEAU 3 - Cases mémoire réelles pour le modulateur (ou le démodulateur) complet.

|  | ROM | RAM |
|---|---|---|
| Réalisation transverse | 2 (m+1) $M$+ 2 | 4(m + 3) $M$ |

(suite)

|  | ROM | RAM |
|---|---|---|
| Réalisation en échelles | $(2m+1)\left[\dfrac{M-1}{2}+2M+2\right]$ | 4(m + 3) $M$ |
| Filtre transverse symétrique | (m+2) $M$+ 2 | 4(m+3) $M$ |
| Réalisation en treillis (normalisé | $m\left\lfloor\dfrac{M}{2}\right\rfloor+2M+2$ | 4(m+3) $M$ |

Les différentes techniques proposées se caractérisent notamment par le fait que, pour un système modulateur-démodulateur mis "dos-à-dos", leurs IES et IEC sont exactement nulles. En pratique, du fait de l'imprécision du calcul numérique, elles sont généralement de l'ordre de $10^{-14}$.

Dans le cas des modes 2 et 4, cette caractéristique de reconstruction parfaite est assurée structurellement, c'est-à-dire qu'elle est maintenue après quantification des coefficients échelles pour le BFDM/OM ou treillis pour l'OFDM/OM.

Deux critères peuvent être pris en compte pour le design des filtres prototypes : la localisation et la sélectivité. On peut également tenir compte d'autres aspects, tels que les distorsions de canal représentatives de différents canaux de transmission, par exemple du type radio-mobile.

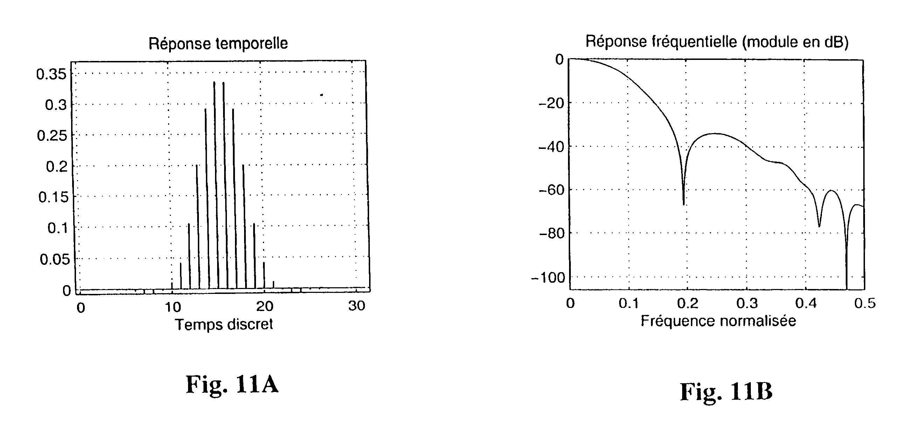

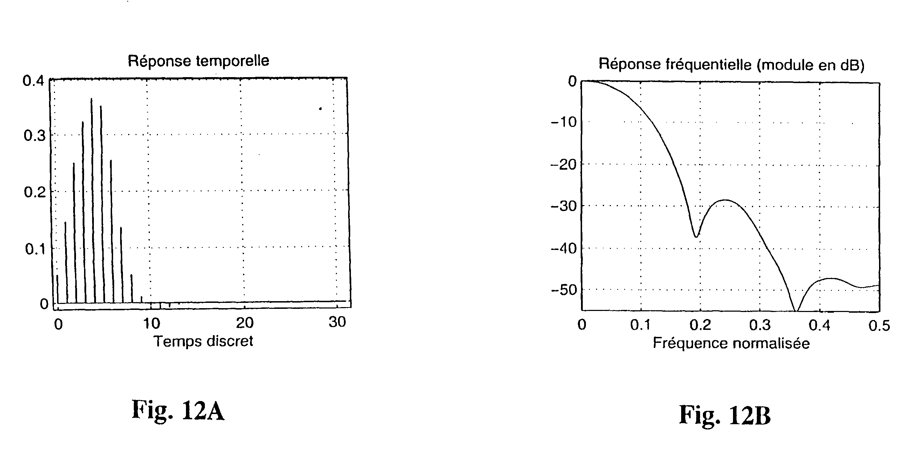

A titre d'exemples purement indicatifs, les tableaux 4 et 5 de l'annexe D donnent des réalisations particulières de l'invention, dont les résultats sont illustrés par les figures 11A, 11B, 12A et 12B.

Les figures 11A et 11B présentent respectivement la réponse temporelle et la réponse fréquentielle pour un prototype biorthogonal avec $M$ = 4, $N$ = 32, $\alpha$ = 8, $\xi$ = 0,9799 (localisation), $\xi_{mod}$= 0,9851 (localisation modifiée, selon le critère de Doroslovacki). Elles correspondent à la première colonne du tableau 4 (coefficients transverses) et au tableau 5 (coefficients des échelles).

Les figures 12A et 11B présentent respectivement la réponse temporelle et la réponse fréquentielle pour un prototype biorthogonal avec $M$ = 4, $N$ = 32, $\alpha$ = 2, $\xi$ = 0,9634 (localisation), $\xi_{mod}$ = 0,9776 (localisation modifiée, selon la mesure de Doroslovacki). Elles correspondent à la seconde colonne du tableau 4.

### Annexe A

### Modulation multiporteuse de type BFDM/OQAM

Dans cette annexe, en guise d'introduction aux modulations BFDM/OQAM, nous rappelons quelques définitions essentielles sur la biorthogonalité ([16], [17], [18]).

Soit **E** un espace vectoriel sur un corps **K,** les définitions et propriétés que nous allons utiliser pour générer une modulation BFDM/OQAM peuvent se résumer ainsi :

**Définition A.1** *Soient $(x_i)_{i \in I}$ et $(\widetilde{x}_i)_{i \in I}$ deux familles de vecteurs de* **E**. *$(x_i)_{i \in I}$, $(\widetilde{x}_i)_{i \in I}$ sont* biorthogonales *si et seulement si:* $\forall (i,j) \in I^2$, $\langle x_i, \widetilde{x}_j \rangle = \delta_{i \cdot j}$

**Définition A.2** *Soient $(x_i)_{i \in I}$ et $(\widetilde{x}_i)_{i \in I}$ deux familles de vecteurs de* **E**. *$(x_i)_{i \in I}$, $(\widetilde{x}_i)_{i \in I}$ forment un couple de* bases biorthogonales *de* **E** *si et seulement si:*

- *$(x_i)_{i \in I}$ et $(\widetilde{x}_i)_{i \in I}$ forment deux bases de* **E**

- *$(x_i)_{i \in I}$ et $(\widetilde{x}_i)_{i \in I}$ sont deux familles biorthogonales*

**Propriété A.1** *Soit $((x_i)_{i \in I}, (\widetilde{x}_i)_{i \in I})$ un couple de bases biorthogonales de* **E**, *alors $\forall x \in$* **E** :

- $x = \Sigma_{i \in I}\langle x_i, x \rangle \widetilde{x}_i = \Sigma_{i \in I}\langle \widetilde{x}_i, x \rangle x_i$

- *si $x = \Sigma_{i \in I} \alpha_i x_i$, alors $\alpha_i = \langle \widetilde{x}_i, x \rangle$*

- si $x = \Sigma_{i \in I} \widetilde{\alpha}_i \widetilde{x}_i$, alors $\widetilde{\alpha}_i = \langle x_i, x \rangle$

- $\|x\|^2 = \sum_{i \in I} \langle x_i, x \rangle^* (\tilde{x}_i, x)$

Un signal complexe modulé en fréquence sur $2M$ sous-porteuses peut s'écrire

$$s(t) = \sum_{n=-\infty}^{+\infty} \sum_{m=0}^{2M-1} a_{m,n} h(t - n\tau_0) e^{2j\pi(f_0+m\nu_0)t} e^{j\varphi_{m,n}} \tag{1}$$

avec:

- $\alpha_{m,n} \in \mathbf{R}$;

- $h$ un filtre prototype réel, de largeur de bande $\nu_0$ et de support fini: $h(t) \in [-T_1, T_2]$ avec $T_1$ et $T_2$ des réels;

- $f_0 = 0$;

- $\nu_0 \tau_0 = \frac{1}{2}$.

Pour obtenir une modulation biorthogonale on cherche à écrire $s(t)$ à l'aide d'un couple $(\chi_{m,n}, \tilde{\chi}_{m,n})$ de bases biorthogonale:

$$s(t) = \sum_{n=-\infty}^{+\infty} \sum_{m=0}^{2M-1} a_{m,n} \chi_{m,n}(t) \tag{2}$$

avec:

$$a_{m,n} = \Re \left\{ \int_{-\infty}^{+\infty} s(t) \tilde{\chi}_{m,n}^*(t) dt \right\} = \langle s, \tilde{\chi}_{m,n} \rangle \tag{3}$$

La dérivation des expressions des bases discrètes associées est présentée en annexe 2.

Après translation de $T_1$ et discrétisation à la période $T_e = \frac{\tau_0}{M} = \frac{1}{2M\nu_0}$, il est également possible, cf. annexe 2, de définir un couple de bases biorthogonales discrètes ($X_{m,n}[k]$, $X_{m,n}[k]$) tel que

$$s[k] = \sum_{n=-\infty}^{+\infty} \sum_{m=0}^{2M-1} a_{m,n} \chi_{m,n}[k] \tag{4}$$

$$a_{m,n} = \Re \left\{ \sum_k s[k] \tilde{\chi}_{m,n}^*[k] \right\} = \langle s, \tilde{\chi}_{m,n} \rangle \tag{5}$$

avec:

$$\chi_{m,n}[k] = (-1)^{mn} \sqrt{2}\, p[k - nM] e^{j\frac{2\pi}{2M} m(k - nM - \frac{D-M}{2})} \tag{6}$$

$$\tilde{\chi}_{m,n}[k] \;\; = \;\; (-1)^{mn}\sqrt{2}\; q[k-nM]e^{j\frac{2\pi}{2M}m\left(k-nM-\frac{D-M}{2}\right)} \tag{7}$$

**Annexe B**

**Le transmultiplexeur BFDM/OQAM**

**B.1 Cas général biorthogonale**

On pose $N$ la longueur du filtre prototype $p[k]$, de telle sorte que:

$$2T = T_1 + T_2 = (N-1)T_e \tag{8}$$

et $T_1 = 2\lambda T$, $T_2 = 2(1 - \lambda)T$ avec $\lambda \in [0,1]$. Alors:

$$
\begin{aligned}
s[k] \;\; = \;\; & \sqrt{2}\sum_{n=-\infty}^{+\infty}\sum_{m=0}^{2M-1} a_{m,n}(-1)^{mn}p[k-nM] \\
& \times e^{j\frac{2\pi}{2M}m(k-nM)}e^{j\left(\varphi_{m,n}-\frac{2\pi}{2M}m\lambda(N-1)\right)}
\end{aligned}
\tag{9}
$$

$$
\begin{aligned}
= \;\; & \sqrt{2}\sum_{n=-\infty}^{+\infty}\sum_{m=0}^{2M-1} a_{m.n}(-1)^{mn}p[k-nM] \\
& \times e^{j\frac{2\pi}{2M}m\left(k-nM-\frac{D-M}{2}\right)}e^{j\left(\varphi_{m,n}+\frac{2\pi}{2M}m\left(\frac{D-M}{2}-\lambda(N-1)\right)\right)}
\end{aligned}
\tag{10}
$$

avec $D$ un paramètre fixé arbitrairement et qui, comme on le verra, permet de gérer le retard de reconstruction. Au vu de l'équation (10), on pose maintenant:

$$\varphi_{m,n} \;\; = \;\; n\frac{\pi}{2} - \frac{2\pi}{2M}\left(\frac{D-M}{2} - \lambda(N-1)\right) \tag{11}$$

$$x_m(n) \;\; = \;\; (-1)^{mn}e^{j\frac{\pi}{2}n}a_{m,n} \tag{12}$$

$$f_m(k) \;\; = \;\; \sqrt{2}\; p[k]e^{j\frac{2\pi}{2M}m\left(k-\frac{D-M}{2}\right)} \tag{13}$$

de sorte que:

$$s[k] = \sum_{n=-\infty}^{+\infty}\sum_{m=0}^{2M-1} x_m(n)f_m(k-nM) \tag{14}$$

Par ailleurs, la base duale de démodulation s'écrit:

$$\tilde{\chi}_{m,n}[k] = (-1)^{mn}\sqrt{2}\; q[k - nM]e^{j\frac{2\pi}{2M}m\left(k-nM-\frac{D-M}{2}\right)}e^{j\frac{\pi}{2}n} \tag{15}$$

et:

$$\hat{a}_{m.n} = \Re\left\{(-1)^{mn}\sqrt{2}\sum_k s[k]q[k - nM]\right.$$
$$\left. \times e^{-j\frac{2\pi}{2M}m\left(k-nM-\frac{D-M}{2}\right)}e^{-j\frac{\pi}{2}n}\right\} \tag{16}$$

$$= \Re\left\{(-1)^{mn}\sqrt{2}\sum_k s[D + nM - k]q[D - k]\right.$$
$$\left. \times e^{-j\frac{2\pi}{2M}m\left(D-k-\frac{D-M}{2}\right)}e^{-j\frac{\pi}{2}n}\right\} \tag{17}$$

$$= \Re\left\{(-1)^{mn}\sqrt{2}\sum_k s[D + nM - k]q[D - k]\right.$$
$$\left. \times e^{j\frac{2\pi}{2M}m\left(k-\frac{D+M}{2}\right)}e^{-j\frac{\pi}{2}n}\right\} \tag{18}$$

ce qui nous amène à poser:

$$h_m(k) = \sqrt{2}\; q[D - k]e^{j\frac{2\pi}{2M}m\left(k-\frac{D+M}{2}\right)} \tag{19}$$

et

$$D = \alpha M - \beta \qquad \text{avec } \alpha \text{ et } \beta \text{ entiers et } 0 \le \beta \le M - 1 \tag{20}$$

de sorte que:

$$\hat{a}_{m,n-\alpha} = \Re\left\{(-1)^{m(n-\alpha)}e^{-j\frac{\pi}{2}(n-\alpha)}\sum_k s[nM - k - \beta]h_m(k)\right\} \tag{21}$$

Le facteur $(-1)^{mn}$ apparaît aussi bien au modulateur qu'au modulateur si bien qu'on peut le supprimer sans rien changer, et on aboutit alors au schéma du transmultiplexeur de la figure 1.

**B.2 Cas particulier orthogonal**

Dans le cas orthogonal, on a $D = N - 1$ et $q[k] = p[k]$, d'où:

$$f_m(k) \;=\; \sqrt{2}\,p[k]\,e^{j\frac{2\pi}{2M}m(k-\frac{N-1}{2})}e^{j\frac{\pi}{2}m} \tag{22}$$

$$h_m(k) \;=\; \sqrt{2}\,p[N-1-k]\,e^{j\frac{2\pi}{2M}m(k-\frac{N-1}{2})}e^{-j\frac{\pi}{2}m} \tag{23}$$

Dans le cas où $q[k] = p[D - k]$ on a alors $p[k] = p[N - 1 - k]$: le prototype est symétrique. Mais contrairement à ce qu'on peut souvent lire de manière implicite ou explicite ([4], [6], [7], [9]), la symétrie du prototype n'est absolument pas nécessaire. On pourra pour s'en convaincre prendre l'un des prototype suivants et vérifier numériquement (une vérification directe est assez fastidieuse) qu'il permet la reconstruction parfaite pour $M = 4$ dans le cas orthogonal (on a alors $N - 1 = D = 7$, $\alpha = 2$ et $\beta = 1$):

$$P(z) \;=\; \frac{1}{4}\left(1 + z^{-1} + z^{-2} + z^{-3} - z^{-4} - z^{-4} - z^{-5} - z^{-6} - z^{-7}\right) \tag{24}$$

$$P(z) \;=\; \frac{1}{4}\left(1 + z^{-1} - z^{-2} + z^{-3} + z^{-4} + z^{-4} + z^{-5} - z^{-6} + z^{-7}\right) \tag{25}$$

On peut même vérifier que tout prototype $P(z) \;=\; \sum_{n=0}^{7} p(n)z^{-n}$ vérifiant (26) à (31) assure aussi la reconstruction parfaite pour $M = 4$ dans le cas orthogonal:

$$c_0 = \pm 1 \quad,\quad c_1 = \pm 1 \tag{26}$$

$$\varepsilon_0 = \pm 1 \quad,\quad \varepsilon_1 = \pm 1 \tag{27}$$

$$|p(0)| \le \frac{\sqrt{2}}{4} \quad,\quad |p(1)| \le \frac{\sqrt{2}}{4} \tag{28}$$

$$p(2) = \varepsilon_1\sqrt{\frac{1}{8} - p(1)^2} \quad,\quad p(3) = \varepsilon_0\sqrt{\frac{1}{8} - p(0)^2} \tag{29}$$

$$p(4) = c_0\varepsilon_0\sqrt{\frac{1}{8} - p(0)^2} \quad,\quad p(5) = c_1\varepsilon_1\sqrt{\frac{1}{8} - p(1)^2} \tag{30}$$

$$p(6) = c_1\varepsilon_1 p(1) \quad,\quad p(7) = c_0\varepsilon_1 p(0) \tag{31}$$

**Annexe C**

**La condition de biorthogonalité**

**C.1 Approche polyphase**

La réalisation d'un schéma de modulation et démodulation selon la figure 1 serait extrêmement coûteux en termes de complexité opératoire. La décomposition du prototype $P(z)$ en fonction de ses composantes polyphases $G_l(z)$, telle que

$$P(z) = \sum_{l=0}^{2M-1} z^{-l} G_l(z^{2M}) \tag{32}$$

permet d'exprimer ensuite les bancs d'analyse et de synthèse sous la forme

$$H_m(z) = \sqrt{2} \sum_{l=0}^{2M-1} e^{\frac{j\pi}{M} m(l - \frac{D-M}{2})} z^{-l} G_l(z^{2M}) \tag{33}$$

$$F_m(z) = \sqrt{2} \sum_{l=0}^{2M-1} e^{\frac{j\pi}{M} m(l - \frac{D-M}{2})} z^{-l} G_l(z^{2M}) \tag{34}$$

On en déduit ainsi l'expression des matrices polyphases $R(z)$ et $E(z)$ des bancs de filtres du modulateur et démodulateur :

$$E(z^2) = W_1 \begin{pmatrix} G_0(z^2) & & 0 \\ & \ddots & \\ 0 & & G_{2M-1}(z^2) \end{pmatrix} \tag{35}$$

$$R(z^2) = J \left[ W_2 \begin{pmatrix} G_0(z^2) & & 0 \\ & \ddots & \\ 0 & & G_{2M-1}(z^2) \end{pmatrix} \right]^T$$
$$= \begin{pmatrix} 0 & & G_{2M-1}(z^2) \\ & \ddots & \\ G_0(z^2) & & 0 \end{pmatrix} W_2^T \tag{36}$$

où $J$, $W_1$ et $W_2$ sont définis ci-dessous :

$$J = \begin{pmatrix} 0 & & 1 \\ & \ddots & \\ 1 & & 0 \end{pmatrix}$$

$$[W_1]_{k,l} = \sqrt{2}\, e^{\frac{j\pi}{M} k(l - \frac{D+M}{2})} \tag{37}$$

$$[W_2]_{k,l} = \sqrt{2}\, e^{\frac{j\pi}{M} k(l - \frac{D-M}{2})} \tag{38}$$

De manière à isoler la fonction transmultiplexeur nous introduisons la notation qui suit, où par commodité d'écriture, on ne prendra plus $x_m(n) = j^n a_{m,n}$, mais $x_m(n) = a_{m,n}$, de manière à avoir:

$$\begin{cases} x_m(n) & = & a_{m,n} \\ \Re(\hat{x}'_m(n)) & = & \hat{x}_m(n) = \hat{a}_{m,n} \end{cases} \Rightarrow \begin{cases} X_m(-jz) & \xleftrightarrow{TZ} & j^n a_{m,n} \\ \hat{X}'_m(-jz) & \xleftrightarrow{TZ} & j^n \hat{x}'_m(n) \end{cases}$$

$$(39)$$

$x_m(n)$ représente les symboles réels à émettre et $\hat{x}'_m(n)$ les symboles complexes reçus avant extraction de la partie réelle. La figure 2 donne une vue globale de la chaîne.

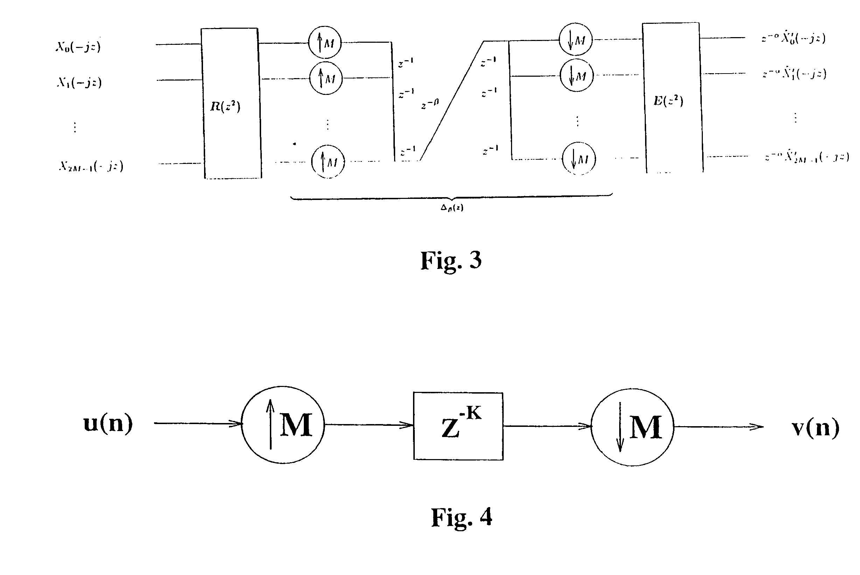

Les matrices polyphases $\mathbf{E}(z^2)$ et $\mathbf{R}(z^2)$ permettent d'obtenir une représentation sous forme polyphase du transmultiplexeur (figure 3). Il reste alors à prendre la partie réelle des échantillons de sortie $\hat{x}'_m(n-\alpha)$ pour reconstituer l'entrée avec un retard de $\alpha$ échantillons.

**C.2 Relation d'entrée-sortie**

Nous notons $\boldsymbol{X}(z)$ le vecteur représentant, dans le domaine transformé en $z$, les données émises. À la réception, après démodulation, nous notons par $\hat{\boldsymbol{X}}'(-jz)$ le vecteur des transformées en $z$ associé aux données reçues. L'extraction de la partie réelle fournit ensuite le vecteur $\hat{\boldsymbol{X}}(z)$. Notre but est alors :

- de déterminer la relation entrée-sortie, c'est-à-dire la relation entre $\boldsymbol{X}(z)$ et $\hat{\boldsymbol{X}}(z)$ ;

- de déterminer les conditions sur les composantes polyphases $G_l(z)$ de $P(z)$ permettant de garantir l'égalité $\tilde{\boldsymbol{X}}(z) = \boldsymbol{X}(z)$,

- d'en déduire le retard de construction $\alpha$.

Les 3 principaux éléments de ce schéma permettant de déterminer la relation entrée-sortie sont les 2 matrices polyphases $\boldsymbol{E}(z)$ et $\boldsymbol{R}(z)$ ainsi que la matrice de transfert $\Delta_\beta(z)$, liée aux expanseurs, délais et décimateurs. Pour déterminer cette dernière on peut se baser sur le cas élémentaire représenté à la figure 4 pour lequel la fonction de transfert est donnée par

$$V(z) = \begin{cases} 0 & \text{si } K \text{ n'est pas multiple de } M, \\ z^{-\frac{K}{M}} U(z) & \text{si } K \text{ est multiple de } M \end{cases} \qquad (40)$$

De la figure 3 il vient ensuite :

$$z^{-\alpha} \hat{X}'(-jz) = E(z^2)\Delta_\beta(z)R(z^2)X(-jz)$$

$$(jz)^{-\alpha} \hat{X}'(z) = E(-z^2)\Delta_\beta(jz)R(-z^2))X(z)$$

$$\hat{X}'(z) = j^\alpha z^\alpha W_1 G(jz) W_2^T X(z) \qquad (41)$$

où la matrice $G(z)$ est définie ci-dessous :

$$G(z) =$$
$$\begin{pmatrix} G_0(z^2) & & 0 \\ & \ddots & \\ 0 & & G_{2M-1}(z^2) \end{pmatrix} \Delta_\beta(z) \begin{pmatrix} 0 & & G_{2M-1}(z^2) \\ & \ddots & \\ G_0(z^2) & & 0 \end{pmatrix} \tag{42}$$

On a alors:

$$\hat{X}(z) = Q(z)X(z) \tag{43}$$

avec:

$$Q(z) = \Re\left\{(jz)^\alpha W_1 G(jz) W_2^T\right\} \tag{44}$$

Après calcul, on obtient:

$$Q(z) = \begin{pmatrix} Q_0(z) & 0 & Q_1(z) & \cdots & Q_{M-1}(z) & 0 \\ 0 & Q_0(z) & 0 & Q_1(z) & & Q_{M-1}(z) \\ Q_1(z) & 0 & Q_0(z) & \ddots & \ddots & \vdots \\ \vdots & Q_1(z) & \ddots & \ddots & 0 & Q_1(z) \\ Q_{M-1}(z) & & \ddots & 0 & Q_0(z) & 0 \\ 0 & Q_{M-1}(z) & \cdots & Q_1(z) & 0 & Q_0(z) \end{pmatrix} \tag{45}$$

avec:

$$Q_\xi(z) = 2(-1)^\xi \sum_{l=0}^{M-1} U_l\left(-z^2\right) \cos\left[\frac{2\pi}{M}\xi\left(l - \frac{d}{2}\right)\right] \tag{46}$$

La signification de $d$ est précisée plus loin. L'expression exacte de $U_l(-z^2)$ dépend d'ailleurs de ce paramètre $d$ (entier positif ou nul), on peut alors démontrer qu'on a reconstruction parfaite si et seulement si:

- si $0 \le d \le M$-1:

  - si $0 \le l \le d$:

$$G_l(z)\,G_{d-l}(z) + z^{-1}G_{M+l}(z)\,G_{M+d-l}(z) = \frac{z^{-s}}{2M} \tag{47}$$

  - si $d + 1 \le l \le M - 1$:

$$G_l(z)\, G_{2M+d-l}(z) + G_{M+l}(z)\, G_{M+d-l}(z) = \frac{z^{-(s-1)}}{2M} \qquad (48)$$

- *si $M \leq d \leq 2M$ - 1:*

  - *si $0 \leq l \leq d$ - $M$ :*

$$G_l(z)\, G_{d-l}(z) + G_{M+l}(z)\, G_{d-M-l}(z) = \frac{z^{-s}}{2M} \qquad (49)$$

  - *si $d + l$ - $M \leq l \leq M$ - 1:*

$$G_l(z)\, G_{d-l}(z) + z^{-1} G_{M+l}(z)\, G_{M+d-l}(z) = \frac{z^{-s}}{2M} \qquad (50)$$

avec *d* et *s* les entiers définis par $D = 2sM + d$, $s \geq 0$ et $0 \leq d \leq 2M$ - 1. Le retard de reconstruction $\alpha$ est lié au paramètre s par les relations:

$$\alpha = \begin{cases} 2s & \text{si } d = 0 \\ 2s+1 & \text{si } d \in \{1, \ldots, M\} \\ 2(s+1) & \text{si } d \in \{M+1, \ldots, 2M-1\} \end{cases} \qquad (51)$$

De ce résultat on peut déduire le cas particulier orthogonal pour lequel $D = N$ - 1, avec *N* la longueur du filtre prototype paraunitaire, c'est-à-dire symétrique ici (on dit que *P(z)* est paraunitaire si $P(z) = z^{-(N-1)}\tilde{P}(z)$ avec $\tilde{P}(z) = P^*(z^{-1})$). On peut en effet vérifier que:

$$G_{d-l}(z) = z^{-s}\tilde{G}_l(z) \qquad \text{si } 0 \leq l \leq d \qquad (52)$$

$$G_{2M+d-l} = z^{-(s-1)}\tilde{G}_l(z) \qquad \text{si } d+1 \leq l \leq 2M-1 \qquad (53)$$

Ainsi, dans le cas particulier orthogonal, on a reconstruction parfaite, avec un retard $\alpha = \frac{N-1+\beta}{M}$, si et seulement si:

$$G_l(z)\, \tilde{G}_l(z) + G_{l+M}(z)\, \tilde{G}_{M+l}(z) = \frac{1}{2M} \qquad 0 \leq l \leq M-1 \qquad (54)$$

**Annexe D**

**E Coefficients des filtres prototypes obtenus par optimisation**

TAB. 4 - Prototypes biorthogonaux avec $M = 4$ et $N = 32$ (coefficients transverses).

| n | exemple figures 11A, 11B | exemple figures 12A, 12B |
|---|---|---|
| 0 | -4.460868105953324e-05 | 5.014949968230972e-02 |
| 1 | -8.8276937049134 7 2e-05 | 1.455583816489019e-O |
| 2 | 1.816721975145588e-04 | 2.500737066757044e-01 |
| 3 | 2.302861759368111e-04 | 3.228805982747062e-O1 |
| 4 | -1.172447599636272e-03 | 3.661515202615520e-01 |
| 5 | -1.827055790732281e-03 | 3.515099229023638e-01 |
| 6 | -3.760044826875730e-03 | 2.548572622632939e-01 |
| 7 | -6.052599354959620e-03 | 1.351315191913547e-01 |
| 8 | -6.541334278009250e-03 | 5.168757567424829e-02 |
| 9 | -2.320957844665448e-03 | 1.125177964848224e-02 |
| 10 | 1.063973252261601e-02 | -4.802381010162210e-03 |
| 11 | 4.151536856291601e-02 | -1.106221296463278e-02 |
| 12 | 1.043838059706333e-01 | -8.872655589434630e-03 |
| 13 | 2.005189128209921e-01 | -3.753426678003194e-03 |
| 14 | 2.913131449163113e-01 | -1.654867643757010e-03 |
| 15 | 3.352627462532674e-01 | -1.383187971152199e-03 |
| 16 | 3.351172696026857e-01 | -3.813932123570836e-04 |
| 17 | 2.909415993397522e-01 | 5.624569918905843e-06 |
| 18 | 2.000454638421703e-01 | -2.475635347949224e-06 |
| 19 | 1.039959799288574e-01 | 4.952234305253537e-05 |
| 20 | 4.124129545474275e-02 | 2.048787314180216e-05 |
| 21 | 1.040407270162191e-02 | 1.004915628115845e-07 |
| 22 | -2.440939909195805e-03 | 4.423431446835775e-08 |
| 23 | -6.649467765409867e-03 | 2.649149072234273e-06 |
| 24 | -5.878063999471562e-03 | 1.785190585201287e-08 |
| 25 | -2.983359331348727e-03 | 6.863128678632993e-12 |
| 26 | -2.475652683945518e-03 | -3.021006714034441e-12 |
| 27 | -8.249232623623326e-04 | -2.308376067571482e-09 |
| 28 | -8.891453128240245e-05 | 6.598349790230041e-12 |
| 29 | -4.464223698699074e-04 | -5.789492272166598e-16 |
| 30 | 3.704504269829711e-04 | -2.548414264695020e-16 |
| 31 | 1.247820119405080e-05 | 8.532126971482393e-13 |

TAB. 5 - Prototype biorthogonal (coefficients des échelles) avec $M = 4$, $N = 32$ et $\alpha = 8$ (cf. fig. 11A, 11B).

| | l=0 | l=1 |
|---|---|---|
| $f_{0,0}$ | 2.820843813510179e-01 | 1.299280891559943e-01 |
| $f_{0,1}$ | -5.673498928902276e-01 | -3.310904763283146e-01 |
| $f_{0,2}$ | 3.721645241266496e-01 | -3.738170157940610e-02 |
| $c_0^0$ | - 1.167480680205269e-01 | -2.847704852297620e-02 |
| $b_0^0$ | 1.064716331427927e-01 | -1.181506919769764e-01 |
| $a_0^1$ | -1.596131503239696e-01 | 9.127789670781582e-02 |
| $b_0^1$ | -2.626782049187459e+01 | -2.054722686392923e+01 |
| $c_0^1$ | -1.614447045462511e-04 | -3.551599154933042e-04 |
| $d_0^1$ | 2.628294699122717e+01 | 2.069686434312222e+01 |

**EP 1 216 557 B1**

**Annexe E**

**Références**

[1] D. Pommier and Yi. Wu. Interleaving of spectrum-spreading in digital radio intended for vehicles. EBU Rev.-Tech., (217):128-142, June 1986.

[2] L. Vandendorpe. Fractionnally spaced linear and decision feedback detectors for transmultiplexers. IEEE Transactions on Signal Processing, 46(4):996-1011, 1998.

[3] B. Le Floch, M. Alard, and C. Berrou. Coded Orthogonal Frequency Division Multiplex. Proceedings of the IEEE, 83:982-996, June 1995.

[4] A. Vahlin and N. Holte. Optimal finite duration pulses for OFDM. IEEE Trans. Communications, 44(1):10-14, January 1996.

[5] W. Kozek, A. F. Molish, and E. Bonek. Pulse design for robust multicarrier transmission over doubly dispersive channels. In Proc. Int. Conf.on Telecommunications (Porto Carras, Greece), volume 2, pages 313-317, June 1998.

[6] H. Boelcskei, P. Duhamel, and R. Hleiss. A design of pulse shaping OFDM/OQAM systems for wireless communications with high spectral efficiency. Submitted to IEEE Transactions on Signal Processing, November 1998.

[7] H. Boelcskei, P. Duhamel, and R. Hleiss. "Design of pulse shaping OFDM/OQAM systems for high data-rate transmission over wireless channels". In Proc. International Conference on Communications (ICC), Vancouver, June 1999.

[8] N. Lacaille. Relations bancs de filtres-modulations multiporteuses et application à l'OFDM/OGAM. Technical report, DEA Université de Rennes I, CNET/DNTR, 1998.

[9] R. D. Koilpillai and P. P. Vaidyanathan. "Cosine-modulated FIR filter banks satisfying perfect reconstruction". IEEE Transactions on Signal Processing, 40(4):770-783, April 1992.

[10] T. Q. Nguyen and R. D. Koilpillai. The theory and design of arbitrary-length cosine-modulated filter banks and wavelets satisfying perfect reconstruction. IEEE Trans. Signal Processing, SP-44(3):473-483, March 1996.

[11] Jalali Ali. "Étude et architecture d'un modem numérique destiné aux modulations multiporteuses de densité 2". PhD thesis, Université de Rennes I, France, 1998.

[12] L. C. Calvez and P. Vilbé. On the uncertainty principle in discrete signals. IEEE Trans. Circuits and Systems-II, 39(6):394-395, June 1992.

[13] M. I. Doroslovac̃ki. Product of second moments in time and frequency for discrete-time signals and the uncertainty limit. Signal Processing, 67(1), May 1998.

[14] C. Roche and P. Siohan. A family of Extended Gaussian Functions with a nearly optimal localization property. In Proc. First Int. Workshop on Multi-Carrier Spread-Spectrurrc (Oberpfaflenhofen, Germany), pages 179-186, April 1997.

[15] P. Heller, T. Karp, and T. Q. Nguyen. A general formulation of modulated filter banks. Submitted to IEEE Transactions on Signal Processing, 1996.

[16] M. Vetterli and J. Kovacevic. "Wavelets and Subband Coding". Prentice Hall, 1995.

[17] H.G. Feichtinger et al. Gabor Analysis and Algorithm - Theory and Applications. Birkhäuser, Boston-Basel-Berlin, 1998.

[18] P. Flandrin. "Temps-Fréquence". Hermès, 1998.

[19] I. Daubechies. The wavelet transform, time-frequency localization and signal analysis. IEEE Trans. on Inf. Theory, 36(5):961-1005, 1990.

[20] T. Karp and A. Mertins. "Lifting scheme for biorthogonal modulated filter banks". In Proc. International Conference on Digital Signal Processing, Santorini, Greece, July 1997.

[21] T. Karp and A. Mertins. "Efficient filter realizations for cosine-modulated filter banks". In Proc. Colloque GRETSI, Grenoble, France, September 1997.

**Revendications**

1. Procédé de transmission d'un signal multiporteuse biorthogonal BFDM/OM, **caractérisé en ce qu'**il met en oeuvre une structure de transmultiplexeur assurant :

   - une étape de modulation, à l'aide d'un banc de filtres de synthèse (11), présentant 2M branches parallèles, $M \geq 2$, alimentées chacune par des données source, et comprenant chacune un expanseur d'ordre M et des premiers moyens de filtrage ;
   - une étape de démodulation, à l'aide d'un banc de filtres d'analyse (12), présentant 2M branches parallèles, comprenant chacune un décimateur d'ordre M et des seconds moyens de filtrage, et délivrant des données reçues représentatives desdites données source,

   lesdits premiers et seconds moyens de filtrage étant déduits d'une fonction de modulation prototype prédéterminée.

2. Procédé de transmission selon la revendication 1, **caractérisé en ce que** lesdits premiers moyens de filtrage dudit banc de filtres de synthèse et/ou seconds moyens de filtrage dudit banc de filtres d'analyse sont respectivement regroupés sous la forme d'une matrice polyphase.

3. Procédé de transmission selon la revendication 2, **caractérisé en ce qu'**au moins une desdites matrices polyphases comprend une transformée de Fourier inverse(51, 61) à 2M entrées et 2M sorties.

4. Procédé de modulation d'un signal multiporteuse biorthogonal BFDM/OM, **caractérisé en ce qu'**il met en oeuvre un banc de filtres de synthèse (11), présentant 2M branches parallèles, $M \geq 2$, alimentées chacune par des données source, et comprenant chacune un expanseur d'ordre M et des premiers moyens de filtrage, lesdits premiers moyens de filtrage étant déduits d'une fonction de modulation prototype prédéterminée.

5. Procédé de modulation selon la revendication 4, **caractérisé en ce qu'**il met en oeuvre une transformée de Fourier inverse (51) alimentée par 2M données source ayant chacune subie un décalage de phase prédéterminée, et alimentant 2M modules de filtrage, formant lesdits premiers moyens de filtrage, suivis chacun d'un expanseur d'ordre M, dont les sorties sont regroupées puis transmises.

6. Procédé de modulation selon la revendication 5, **caractérisé en ce qu'**il délivre des données s[k] telles que :

$$x_m^0(n) = a_{m,n} e^{j\frac{\pi}{2}n}$$

$$x_l^1(n) = \sqrt{2} \sum_{k=0}^{2M-1} x_k^0(n) e^{-j\frac{2\pi}{2M}k\frac{D-M}{2}} e^{j\frac{2\pi}{2M}kl}$$

$$= 2M\sqrt{2}\,\mathrm{IFFT}\left( x_0^0(n), \cdots, x_{2M-1}^0(n) e^{-j\frac{2\pi}{2M}(2M-1)\frac{D-M}{2}} \right)[l]$$

$$x_l^2(n) = \sum_{k=0}^{m-1} p(l + 2kM) x_k^1(n - 2k)$$

$$s[k] = \sum_{n=\left\lfloor \frac{k}{M} \right\rfloor -1}^{\left\lfloor \frac{k}{M} \right\rfloor} x_{k-nM}^2(n)$$

où D = $\alpha$M - $\beta$, et a$_{m,n}$ représente les données à moduler
avec $\alpha$ entier représentant le retard de reconstruction ;
$\beta$ entier compris entre 0 et M-1 ;
et $\lfloor$ $\rfloor$ est la fonction "partie entière".

7. Procédé de démodulation d'un signal multiporteuse biorthogonal BFDM/OM, **caractérisé en ce qu'**il met en oeuvre un banc de filtres d'analyse (12), présentant 2M branches parallèles, comprenant chacune un décimateur d'ordre M et des seconds moyens de filtrage, et délivrant des données reçues représentatives de données source, lesdits seconds moyens de filtrage étant déduits d'une fonction de modulation prototype prédéterminée.

8. Procédé de démodulation selon la revendication 7, **caractérisé en ce qu'**il met en oeuvre une transformée de Fourier inverse (61) alimentée par 2M branches, elles-mêmes alimentées par ledit signal transmis, et comprenant chacune un décimateur d'ordre M suivi d'un module de filtrage, formant lesdits seconds moyens de filtrage, et alimentant 2 M multiplieurs de décalage de phase, délivrant une estimation des données source.

9. Procédé de démodulation selon la revendication 8, **caractérisé en ce qu'**il délivre des données â$_{m,n-\alpha}$ telles que :

$$\hat{x}'_l{}^2(n - \alpha) = s[nM - \beta - l]$$

$$\hat{x}'_l{}^1(n - \alpha) = \sum_{k=0}^{m-1} p(l + 2kM) \hat{x}'_l{}^2(n - \alpha - 2k)$$

$$\hat{x}'_l{}^0(n - \alpha) = \sqrt{2} e^{-j\frac{2\pi}{2M} l \frac{D+M}{2}} \sum_{k=0}^{2M-1} \hat{x}'_l{}^1(n - \alpha) e^{j\frac{2\pi}{2M} kl}$$

$$= 2M\sqrt{2} e^{-j\frac{2\pi}{2M} l \frac{D+M}{2}} \text{IFFT}\left(\hat{x}'_l{}'^1(n - \alpha), \cdots, \hat{x}'_{2M-1}{}'^1(n - \alpha)\right)[l]$$

$$\hat{a}_{m,n-\alpha} = \Re\left\{ e^{-j\frac{\pi}{2}(n-\alpha)} \hat{x}'_l{}^0(n - \alpha) \right\}$$

avec : D=2.s.M + d, et s[·] représente les données à démoduler
où : s est un entier ;
d est compris entre 0 et 2M-1.

**10.** Procédé de modulation selon l'une quelconque des revendications 4 à 6 ou de démodulation selon l'une quelconque des revendications 7 à 9, **caractérisé en ce que** lesdits moyens de filtrage sont réalisés sous l'une des formes appartenant au groupe comprenant :

- les filtres à structure transverse ;
- les filtres à structure en échelle ; et
- les filtres à structure en treillis.

**11.** Procédé selon l'une quelconque des revendications 1 à 10, **caractérisé en ce que** ledit signal multiporteuse biorthogonal est un signal OFDM/OM.

**12.** Dispositif d'émission et/ou de réception d'un signal BFDM/OM, mettant en oeuvre le procédé de l'une quelconque des revendications 1 à 11.

**Claims**

**1.** Method of transmitting a BFDM/OM biorthogonal multicarrier signal, **characterized in that** it implements a transmultiplexer structure ensuring:

- a step of modulation, with the aid of a bank of synthesis filters (11), exhibiting 2M parallel branches, M ≥ 2, each supplied with source data, and each comprising an expander of order M and first filtering means;
- a step of demodulation, with the aid of a bank of analysis filters (12), exhibiting 2M parallel branches, each comprising a decimator of order M and second filtering means, and delivering data received representative of said source data,
said first and second filtering means being deduced from a predetermined prototype modulation function.

**2.** Method of transmission according to Claim 1, **characterized in that** said first filtering means of said bank of synthesis filters and/or second filtering means of said bank of analysis filters are respectively grouped together in the form of a polyphase matrix.

**3.** Method of transmission according to Claim 2, **characterized in that** at least one of said polyphase matrices comprises an inverse Fourier transform (51,61) with 2M inputs and 2M outputs.

**4.** Method of modulating a BFDM/OM biorthogonal multicarrier signal, **characterized in that** it implements a bank of synthesis filters (11), exhibiting 2M parallel branches, M ≥ 2, each supplied with source data, and each comprising an expander of order M and first filtering means, said first filtering means being deduced from a predetermined prototype modulation function.

**5.** Method of modulation according to Claim 4, **characterized in that** it implements an inverse Fourier transform (51) supplied with 2M source data each having undergone a predetermined phase shift, and supplying 2M filtering modules, forming said first filtering means, each followed by an expander of order M, whose outputs are grouped together and then transmitted.

**6.** Method of modulation according to Claim 5, **characterized in that** it delivers data s[k] such that:

$$x_m^0(n) = a_{m,n} e^{j\frac{\pi}{2}n}$$

$$x_l^1(n) = \sqrt{2} \sum_{k=0}^{2M-1} x_k^0(n)e^{-j\frac{2\pi}{2M}k\frac{D-M}{2}} e^{j\frac{2\pi}{2M}kl}$$

$$= 2M\sqrt{2}\mathrm{IFFT}\left( x_0^0(n),\cdots, x_{2M-1}^0(n)e^{-j\frac{2\pi}{2M}(2M-1)\frac{D-M}{2}} \right)[l]$$

$$x_l^2(n) = \sum_{k=0}^{m-1} p(l+2kM)x_k^1(n-2k)$$

$$s[k] = \sum_{n=\left\lfloor \frac{k}{M} \right\rfloor-1}^{\left\lfloor \frac{k}{M} \right\rfloor} x_{k-nM}^2(n)$$

where D = αM - β, and $a_{m,n}$ represents the data to be modulated
with α integer representing the reconstruction delay;
β integer lying between 0 and M-1;
and $\lfloor \ \rfloor$ is the "integer part" function.

7. Method of demodulating a BFDM/OM biorthogonal multicarrier signal, **characterized in that** it implements a bank of analysis filters (12), exhibiting 2M parallel branches, each comprising a decimator of order M and second filtering means, and delivering data received representative of source data, said second filtering means being deduced from a predetermined prototype modulation function.

8. Method of demodulation according to Claim 7, **characterized in that** it implements an inverse Fourier transform (61) supplied by 2M branches, themselves supplied with said transmitted signal, and each comprising a decimator of order M followed by a filtering module, forming said second filtering means, and supplying 2 M phase shift multipliers, delivering an estimation of the source data.

9. Method of demodulation according to Claim 8, **characterized in that** it delivers data $\hat{a}_{m,n-\alpha}$ such that:

$$\hat{x}_l'^2(n-\alpha) = s[nM - \beta - l]$$

$$\hat{x}_l'^1(n-\alpha) = \sum_{k=0}^{m-1} p(l+2kM)\hat{x}_l'^2(n-\alpha-2k)$$

$$\hat{x}_l'^0(n-\alpha) = \sqrt{2}e^{-j\frac{2\pi}{2M}l\frac{D+M}{2}} \sum_{k=0}^{2M-1} \hat{x}_l'^1(n-\alpha)e^{j\frac{2\pi}{2M}kl}$$

EP 1 216 557 B1

$$= 2M\sqrt{2}e^{-j\frac{2\pi}{2M}l\frac{D+M}{2}}\text{IFFT}\left(\hat{x}_l'^1(n-\alpha),\cdots,\hat{x}_{2M-1}'^1(n-\alpha)\right)[l]$$

$$\hat{a}_{m,n-\alpha} = \Re\left\{e^{-j\frac{\pi}{2}(n-\alpha)}\hat{x}_l'^0(n-\alpha)\right\}$$

with: D = 2.s.M + d, and s[.] represents the data to be demodulated
where: s is an integer;
d lies between 0 and 2M-1.

10. Method of modulation according to any one of Claims 4 to 6 or of demodulation according to any one of Claims 7 to 9, **characterized in that** said filtering means are embodied in one of the forms belonging to the group comprising:

- filters with transverse structure;
- filters with ladder structure; and
- filters with trellis structure.

11. Method according to any one of Claims 1 to 10, **characterized in that** said biorthogonal multicarrier signal is an OFDM/OM signal.

12. Device for sending and/or receiving a BFDM/OM signal, implementing the method of any one of Claims 1 to 11.

**Patentansprüche**

1. Verfahren zur Übertragung eines bi-orthogonalen Multiträgersignals BFDM/OM, **dadurch gekennzeichnet, dass** es eine Transmultiplexer-Struktur anwendet, die gewährleistet:

- einen Modulationsschritt mit Hilfe einer Synthesefilterbank (11), die 2M parallele Zweige aufweist, mit M $\geq$ 2, die je mit Quelldaten gespeist werden und je einen Expander der Ordnung M und erste Filtermittel aufweisen;
- einen Demodulationsschritt mit Hilfe einer Analysefilterbank (12), die 2M parallele Zweige aufweist, die je einen Dezimator der Ordnung M und zweite Filtermittel aufweisen und empfangene Daten liefern, die für die Quelldaten repräsentativ sind,

wobei die ersten und zweiten Filtermittel von einer vorbestimmten Prototyp-Modulationsfunktion abgeleitet werden.

2. Übertragungsverfahren nach Anspruch 1, **dadurch gekennzeichnet, dass** die ersten Filtermittel der Synthesefilterbank und/oder die zweiten Filtermittel der Analysefilterbank je in Form einer Polyphasenmatrix zusammengefasst sind.

3. Übertragungsverfahren nach Anspruch 2, **dadurch gekennzeichnet, dass** mindestens eine der Polyphasenmatrizen eine inverse FourierTransformation (51, 61) mit 2M Eingängen und 2M Ausgängen enthält.

4. Verfahren zur Modulation eines bi-orthogonalen Multiträgersignals BFDM/OM, **dadurch gekennzeichnet, dass** es eine Synthesefilterbank (11) anwendet, die 2M parallele Zweige hat, mit M $\geq$ 2, die je von Quelldaten gespeist werden und je einen Expander der Ordnung M und erste Filtermittel aufweisen, wobei die ersten Filtermittel von einer vorbestimmten Prototyp-Modulationsfunktion abgeleitet werden.

5. Modulationsverfahren nach Anspruch 4, **dadurch gekennzeichnet, dass** es eine inverse FourierTransformation (51) anwendet, die von 2M Quelldaten gespeist wird, die je einer vorbestimmten Phasenverschiebung unterzogen wurden, und 2M Filtermodule speist, die die ersten Filtermittel bilden, je gefolgt von einem Expander der Ordnung M, dessen Ausgänge zusammengefasst und dann übertragen werden.

**6.** Modulationsverfahren nach Anspruch 5, **dadurch gekennzeichnet, dass** es derartige Daten s [k] liefert, dass:

$$x_m^0(n) = a_{m,n} e^{j\frac{\pi}{2}n}$$

$$x_l^1(n) = \sqrt{2} \sum_{k=0}^{2M-1} x_k^0(n) e^{-j\frac{2\pi}{2M}k\frac{D-M}{2}} e^{j\frac{2\pi}{2M}kl}$$

$$= 2M\sqrt{2}\,\mathrm{IFFT}\left( x_0^0(n),\cdots,x_{2M-1}^0(n) e^{-j\frac{2\pi}{2M}(2M-1)\frac{D-M}{2}} \right)[l]$$

$$x_l^2(n) = \sum_{k=0}^{m-1} p(l+2kM) x_k^1(n-2k)$$

$$s[k] = \sum_{n=\left\lfloor\frac{k}{M}\right\rfloor-1}^{\left\lfloor\frac{k}{M}\right\rfloor} x_{k-nM}^2(n)$$

wobei gilt D = $\alpha$M-$\beta$, und $a_{m,n}$ die zu modulierenden Daten darstellt,
mit $\alpha$ eine ganze Zahl, die die Wiederherstellungsverzögerung darstellt;
$\beta$ eine ganze Zahl zwischen 0 und M-1;
und $\lfloor \ \rfloor$ die Ganzteilfunktion ist.

**7.** Verfahren zur Demodulation eines bi-orthogonalen Multiträgersignals BFDM/OM, **dadurch gekennzeichnet, dass** es eine Analysefilterbank (12) anwendet, die 2M parallele Zweige hat, die je einen Dezimator der Ordnung M und zweite Filtermittel aufweisen und empfangene Daten liefern, die für Quelldaten repräsentativ sind, wobei die zweiten Filtermittel von einer vorbestimmten Prototyp-Modulationsfunktion abgeleitet werden.

**8.** Demodulationsverfahren nach Anspruch 7, **dadurch gekennzeichnet, dass** es eine inverse FourierTransformation (61) anwendet, die von 2M Zweigen gespeist wird, die selbst von dem übertragenen Signal gespeist werden und je einen Dezimator der Ordnung M gefolgt von einem Filtermodul aufweisen, das die zweiten Filtermittel bildet, und 2M Phasenverschiebungs-Multiplikatoren speist, die eine Schätzung der Quelldaten liefern.

**9.** Demodulationsverfahren nach Anspruch 8, **dadurch gekennzeichnet, dass** es derartige Daten $\hat{a}_{m,n-\alpha}$ liefert, dass:

$$\hat{x}_l^2(n-\alpha) = s[nM - \beta - l]$$

$$\hat{x}_l^1(n-\alpha) = \sum_{k=0}^{m-1} p(l+2kM)\hat{x}_l^2(n-\alpha-2k)$$

$$\hat{x}_l^0(n-\alpha) = \sqrt{2}e^{-j\frac{2\pi}{2M}l\frac{D+M}{2}} \sum_{k=0}^{2M-1} \hat{x}_l^1(n-\alpha) e^{j\frac{2\pi}{2M}kl}$$

$$= 2M\sqrt{2}e^{-j\frac{2\pi}{2M}l\frac{D+M}{2}} \mathrm{IFFT}\left(\hat{x}_l^1(n-\alpha),\cdots,\hat{x}_{2M-1}^1(n-\alpha)\right)[l]$$

$$\hat{a}_{m,n-\alpha} = \Re\left\{ e^{-j\frac{\pi}{2}(n-\alpha)} \hat{x}_l^0(n-\alpha) \right\}$$

mit D = 2.s.M+d, und s[.] stellt die zu demodulierenden Daten dar
wobei: s eine ganze Zahl ist;
d zwischen 0 und 2M-1 liegt.

**10.** Modulationsverfahren nach einem der Ansprüche 4 bis 6 oder Demodulationsverfahren nach einem der Ansprüche 7 bis 9, **dadurch gekennzeichnet, dass** die Filtermittel in einer der Formen hergestellt werden, die zu der Gruppe gehören, die enthält:

- die Filter mit transversaler Struktur;
- die Filter mit Leiterstruktur; und
- die Filter mit Trellis-Struktur.

**11.** Verfahren nach einem der Ansprüche 1 bis 10, **dadurch gekennzeichnet, dass** das bi-orthogonale Multiträgersignal ein OFDM/OM-Signal ist.

**12.** Sende- und/oder Empfangsvorrichtung eines BFDM/OM-Signals, die das Verfahren nach einem der Ansprüche 1 bis 11 einsetzt.

EP 1 216 557 B1

**Fig. 1**

$a_{0,n}$ — $e^{j\frac{\pi}{2}n}$ — $x_0(n)$ — ↑M — $F_0(z)$ — 11

$a_{1,n}$ — $e^{j\frac{\pi}{2}n}$ — $x_1(n)$ — ↑M — $F_1(z)$

$a_{2M-1,n}$ — $e^{j\frac{\pi}{2}n}$ — $x_{2M-1}(n)$ — ↑M — $F_{2M-1}(z)$

⊕ — $s[k]$ — $z^{-\beta}$

12 — $H_0(z)$ — ↓M — $e^{-j\frac{\pi}{2}(n-\alpha)}$ — $\Re\{\cdot\}$ — $\hat{a}_{0,n-\alpha}$

$H_1(z)$ — ↓M — $e^{-j\frac{\pi}{2}(n-\alpha)}$ — $\Re\{\cdot\}$ — $\hat{a}_{1,n-\alpha}$

$H_{2M-1}(z)$ — ↓M — $e^{-j\frac{\pi}{2}(n-\alpha)}$ — $\Re\{\cdot\}$ — $\hat{a}_{2M-1,n-\alpha}$

**Fig. 2**

$x_m(n)$ — $j^n$ — $j^n x_m(n)$ — TMUX. — $j^{n-\alpha}\hat{x}'_m(n-\alpha)$ — $-j^{n-\alpha}$ — $\hat{x}'_m(n-\alpha)$ — $\Re\{\cdot\}$ — $\hat{x}'_m(n-\alpha)$

**Fig. 3**

**Fig. 4**

u(n)

v(n)

EP 1 216 557 B1

$2M\sqrt{2}$

$X_0(-jz)$ $x_0^0(n)$

$X_1(-jz)$ $x_1^0(n)$

$2M\sqrt{2}\,e^{-j\frac{2\pi}{2M}\frac{D-M}{2}}$

$X_{2M-1}(-jz)$ $x_{2M-1}^0(n)$

$2M\sqrt{2}\,e^{-j\frac{2\pi}{2M}(2M-1)\frac{D-M}{2}}$

51

IFFT

$2M \times 2M$

$x_0^1(n)$ $G_0(z^2)$ $x_0^2(n)$ $\uparrow M$ $s[k]$

$x_1^1(n)$ $G_1(z^2)$ $x_1^2(n)$ $\uparrow M$ $z^{-1}$

$z^{-1}$

$G_{2M-1}(z^2)$ $\uparrow M$ $z^{-1}$

$x_{2M-1}^1(n)$ $x_{2M-1}^2(n)$

**Fig. 5**

61

$\hat{x}_0'^2(n-\alpha)$ $\hat{x}_0'^1(n-\alpha)$

$2M\sqrt{2}$

$\hat{x}_0'^0(n-\alpha)$

$s[k]$ $z^{-\beta}$ $z^{-1}$ $\downarrow M$ $G_0(z^2)$ $\otimes$ $z^{-\alpha}\hat{X}_0'(-jz)$

$z^{-1}$ $\downarrow M$ $G_1(z^2)$ $\hat{x}_1'^0(n-\alpha)$ $\otimes$ $z^{-\alpha}\hat{X}_1'(-jz)$

IFFT

$2M \times 2M$

$\hat{x}_1'^2(n-\alpha)$ $\hat{x}_1'^1(n-\alpha)$

$2M\sqrt{2}\,e^{-j\frac{2\pi}{2M}\frac{D+M}{2}}$

$z^{-1}$ $\downarrow M$ $G_{2M-1}(z^2)$ $\otimes$ $z^{-\alpha}\hat{X}_{2M-1}'(-jz)$

$\hat{x}_{2M-1}'^2(n-\alpha)$ $\hat{x}_{2M-1}'^1(n-\alpha)$ $\hat{x}_{2M-1}'^0(n-\alpha)$

$2M\sqrt{2}\,e^{-j\frac{2\pi}{2M}(2M-1)\frac{D+M}{2}}$

**Fig. 6**

Fig. 7

Fig. 8

Fig. 9

**Fig. 10**

**Fig. 11A**

**Fig. 11B**

EP 1 216 557 B1

Réponse temporelle

Temps discret

**Fig. 12A**

Réponse fréquentielle (module en dB)

Fréquence normalisée

**Fig. 12B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **G. Strand ; T. Nguyen.** Wavelets and Filter Banks. Wellesey-Cambridge Press, 1996
- **D. Pommier ; Yi. Wu.** Interleaving of spectrum-spreading in digital radio intended for vehicles. *EBU Rev.-Tech.,* Juin 1986, vol. 217, 128-142
- **L. Vandendorpe.** Fractionnally spaced linear and decision feedback detectors for transmultiplexers. *IEEE Transactions on Signal Processing,* 1998, vol. 46 (4), 996-1011
- **B. Le Floch ; M. Alard ; C. Berrou.** Coded Orthogonal Frequency Division Multiplex. *Proceedings of the IEEE,* Juin 1995, vol. 83, 982-996
- **A. Vahlin ; N. Holte.** Optimal finite duration pulses for OFDM. *IEEE Trans. Communications,* Janvier 1996, vol. 44 (1), 10-14
- **W. Kozek ; A. F. Molish ; E. Bonek.** Pulse design for robust multicarrier transmission over doubly dispersive channels. *Proc. Int. Conf.on Telecommunications,* Juin 1998, vol. 2, 313-317
- **H. Boelcskei ; P. Duhamel ; R. Hleiss.** A design of pulse shaping OFDM/OQAM systems for wireless communications with high spectral efficiency. *IEEE Transactions on Signal Processing,* Novembre 1998
- **H. Boelcskei ; P. Duhamel ; R. Hleiss.** Design of pulse shaping OFDM/OQAM systems for high data-rate transmission over wireless channels. *Proc. International Conference on Communications,* Juin 1999
- **N. Lacaille.** Relations bancs de filtres-modulations multiporteuses et application à l'OFDM/OGAM. *Technical report, DEA Université de Rennes I, CNET/DNTR,* 1998
- **R. D. Koilpillai ; P. P. Vaidyanathan.** Cosine-modulated FIR filter banks satisfying perfect reconstruction. *IEEE Transactions on Signal Processing,* Avril 1992, vol. 40 (4), 770-783

- **T. Q. Nguyen ; R. D. Koilpillai.** The theory and design of arbitrary-length cosine-modulated filter banks and wavelets satisfying perfect reconstruction. *IEEE Trans. Signal Processing,* 1996, vol. SP-44 (3), 473-483
- **Jalali Ali.** Étude et architecture d'un modem numérique destiné aux modulations multiporteuses de densité 2. *PhD thesis, Université de Rennes I, France,* 1998
- **L. C. Calvez ; P. Vilbé.** On the uncertainty principle in discrete signals. *IEEE Trans. Circuits and Systems-II,* Juin 1992, vol. 39 (6), 394-395
- **M. I. Doroslovački.** Product of second moments in time and frequency for discrete-time signals and the uncertainty limit. *Signal Processing,* Mai 1998, vol. 67, 1
- **C. Roche ; P. Siohan.** A family of Extended Gaussian Functions with a nearly optimal localization property. *Proc. First Int. Workshop on Multi-Carrier Spread-Spectrurrc,* Avril 1997, 179-186
- **P. Heller ; T. Karp ; T. Q. Nguyen.** A general formulation of modulated filter banks. *Submitted to IEEE Transactions on Signal Processing,* 1996
- **M. Vetterli ; J. Kovacevic.** Wavelets and Subband Coding. *Prentice Hall*
- **H.G. Feichtinger et al.** *Gabor Analysis and Algorithm - Theory and Applications. Birkhäuser,* 1998
- **P. Flandrin.** Temps-Fréquence. *Hermès,* 1998
- **I. Daubechies.** The wavelet transform, time-frequency localization and signal analysis. *IEEE Trans. on Inf. Theory,* 1990, vol. 36 (5), 961-1005
- **T. Karp ; A. Mertins.** Lifting scheme for biorthogonal modulated filter banks. *Proc. International Conference on Digital Signal Processing,* Juillet 1997
- **T. Karp ; A. Mertins.** Efficient filter realizations for cosine-modulated filter banks. *Proc. Colloque GRETSI,* Septembre 1997